# EUROPEAN PATENT APPLICATION

(11) **EP 2 784 738 A1**
(43) Date of publication of application: **01.10.2014**
(21) Application number: 14162280.3
(22) Date of filing: 28.03.2014
(51) Int. Cl.: G06Q 30/02

(54) **Providing offers to customers**

(30) Priority: 28.03.2013 GB 201305666
(71) Applicant: Barclays Bank PLC, London, Greater London E14 5HP (GB)
(72) Inventor: Smith, Duncan, Northampton, NN4 7SG (GB); Head, Clive, Milton Keynes MK4 4FJ (GB); Miller, Martin, Guildford, GU3 3BL (GB)
(74) Representative: Boult Wade Tennant

(57) **Abstract**

Method and apparatus for selecting customers to receive offers comprising: obtaining a set of transactions for a group of customers. Assigning transaction categories to the transactions within the set of transactions. Determining for each customer in the group of customers, a distribution of their transaction categories. Selecting the one or more customers to receive an offer based on their determined distribution of transaction categories.

## Description

### Field of the Invention

The present invention relates to a system and method for selecting offers and in particular for selecting and providing offers relevant to particular customers.

### Background of the Invention

Merchants including retailers, manufacturers and service providers (as well as others) may wish to increase their business and sales by issuing offers to customers and potential customers. For example, these offers may include vouchers, discounts (free offers), pre-paid deals and flash sales.

It is important to target such offers to avoid adversely affecting income and sales. For example, making discount or free offers available to existing regular customers may have the effect of reducing revenue from those customers rather than building business. Furthermore, issuing offers to customers who have no prospect of taking them up may lead to offer fatigue whereby they may ignore all further offers including those that may be more relevant to them.

Where an offer or voucher system provides particularly relevant offers to individual customers, then those customers are more likely to use that offer system to the benefit of both customer and merchant. Merchants are also more likely to be willing to use a particular offer distribution system if they have more confidence that offers are being targeted more accurately as this can improve their business.

WO 2010/047854 describes a system and method for delivering targeted marketing offers to consumers through an online portal. Financial transaction data relating to consumers are matched with offers in the system and presented to the consumer when they review prior transactions and purchases within a financial institution portal.

However, presenting offers against transactions relating to similar individual product transactions may lack sufficient targeting to improve the relevancy of offers to particular customers.

Therefore, there is required a system and method that overcomes these problems and improves offer selection.

### Summary of the Invention

Against this background and in accordance with a first aspect there is provided a method of selecting customers to receive offers comprising the steps of:
obtaining a set of transactions for a group of customers;
assigning transaction categories to the transactions within the set of transactions;
determining for each customer in the group of customers, a distribution of their transaction categories; and
selecting the one or more customers to receive an offer based on their determined distribution of transaction categories. Therefore, offers may be selected more accurately and be more relevant to individual customers as their past transactions may be taken into account. Furthermore, customers may receive fewer irrelevant offers and so be more receptive to offers that they do receive and more likely to take up such offers. There may be one or more sets of transactions. For example, the transactions may include standing order, direct debit, debit card, and/or credit card transactions.

Preferably, the offer may have a target customer transaction profile. In other words, the offer may be associated with a particular customer type indicating those customers for which the offer is particularly suitable. The target customer transaction profile may be determined by a merchant providing the offer.

Optionally, the distribution of transaction categories for the selected one or more customers may match the target customer transaction profile. The target customer transaction profile may therefore, define a particular distribution or range of distributions of transaction categories for which the offer is particularly suitable. For example, the offer may be more suitable for customers who purchase from a type of merchant (e.g. electronics retailers) more than an average customer. A particular customer's transaction profile may indicate this and so may be used to match offers specialising in electronic products with this customer, for example.

Optionally, the method may further comprise the step of assigning a customer transaction profile to each customer based on their distribution of transaction categories. This categorisation may simplify subsequent matching of offers to customers. The customer transaction profile may be converted to a numerical representation of the customer's relevancy to the offer.

Preferably, assigning a transaction profile to each customer may further comprise the steps of:
determining a distribution of transactions for the group of customers; and
comparing the distribution of transactions for each customer with the determined distribution. Therefore, customers with particular spending habits may be categorised in a different way. This allows customers to be identified who spend more or less than average or particular products or services as compared with the population in general or particular sub-sets of the population. The determined distribution of transactions for the group of customers may also be averaged or otherwise evaluated before comparison with the distribution of transactions for each customer. The mean distribution may also be considered.

Advantageously, selecting the one or more customers may further comprise matching the target customer transaction profile with the assigned customer transaction profile. This may further simplify the matching step.

Preferably, assigning transaction categories may include determining a sector of each transaction. The sector may be a merchant sector, retail sector or service sector, for example. The particular sector may be determined from the merchant name or reference, for example.

Optionally, assigning transaction categories may include determining a merchant for each transaction. Some transactions may be ignored or remain unassigned.

Preferably, the transactions may be selected from the group consisting of: credit card transactions, debit card transactions, standing orders, mobile transaction, internet transaction, in-store transaction and offer redemption transactions.

Optionally, the offers may be any one or more selected from the group consisting of: pre-paid offers, discount, free, and flash sale offers. Other offer or voucher types may be used.

Advantageously, the method may further comprise the step of sending or presenting the offer to the selected one or more customers. The customers may receive offers in various ways and formats including but not limited to email, mobile application, web site, post, SMS and MMS.

Optionally, the method may further comprise the step of restricting the customers to be selected to receive an offer by:
obtaining a set of customer attributes for each customer; and
restricting the offer to customers matching the customer attributes with one or more offer target attributes. The pool of customers available to receive one or more offers may be restricted before other selection criteria are applied. This may improve targeting of offers as well as system efficiency as fewer customers and transactions need to be processed or analysed. Customer attributes may include geo-demographic, behavioural, and/or attitudinal attributes, for example.

Preferably, the method may further comprise the step of determining a customer category for each customer from the set of customer attributes. Therefore, customers may be included or excluded from consideration or further processing based on their category or categories.

Optionally, each offer target attribute may be a target customer category, and wherein matching the customer attributes with one or more offer target attributes further comprises matching the customer categories with the target customer categories.

Optionally, the customer attributes and offer target attributes may be selected from the group consisting of: age, income, drive time to merchant, walk time to merchant, travel time to merchant, home move data (e.g. recently moved, currently moving), vehicle MOT test date, pet information, gender, and distance of customer home or work place to offer outlet.

Preferably, the customer attributes may be obtained as preferences indicated by the customers. For example, these may be obtained during a registration procedure or by subsequent updates to stored user information.

Optionally, the method may further comprise the steps of:
determining from the transactions one or more shopping locations for each customer; and
restricting the offer to customers who have one or more shopping locations within a predetermined distance an offer location. This may further increase the likelihood that an offer will be redeemed, accepted or used by a customer. The predetermined or required minimum distance may be set or adjusted by a merchant, for example. Some offers may be restricted to particular channels only. For example, some offers may only be available online (i.e. not dependent on distance or time to merchant). Other offers may only be available to customers searching for a physical store.

According to a second aspect, there is provided a system for selecting customers to receive offers comprising processing logic configured to:
obtain a set of transactions for a group of customers;
assign transaction categories to the transactions within the set of transactions;
determine for each customer in the group of customers, a distribution of their transaction categories; and
select the one or more customers to receive an offer based on their determined distribution of transaction categories. Further rules may be applied to ensure that customers receive a balanced set of offers.

Preferably, the system may further comprise a database configured to store the transactions.

Advantageously, the database may be further configured to store customer attributes.

Optionally, the logic may be further configured to restrict the customers to be selected to receive an offer by restricting the offer to customers matching the stored customer attributes with one or more offer target attributes.

Preferably, the system may further comprise one or more customer application comprising logic configured to present the selected offer to the customer. The customer application may receive the offers over a network such as the internet, for example.

Optionally, the logic of the one or more customer application may be further configured to receive customer attributes from a user.

Optionally, the logic of the one or more customer application may be further configured search for one or more further offers. The search may be initiated by the customer to find offers not necessarily selected by the selected.

Preferably, the customer application may be a mobile application. The mobile application may operate on a smart phone running a suitable operating system (e.g. iOS or Android), a tablet computer or other portable device.

Preferably, the system may further comprise a database of offers.

Optionally, the offers in the database of offers may be associated with offer target customer attributes.

Preferably, the system may further comprise one or more merchant applications comprising logic configured to define one or more offers. The merchant applications may be also issue, create or publish offers over the internet.

Optionally, the logic of the merchant application may be further configured to define an offer type selected from the group consisting of: discount offer, free offer, pre-paid offer, and flash sale offer.

Optionally, the logic of the merchant application may be further configured to define one or more target customer attributes of the offer.

Optionally, the one or more target customer attributes may be selected from the group consisting of: proximity of customer to merchant; customer age or age group; existing customers; non-customers; gender; spend in merchant sector; customer income; spend at merchant; frequency purchasing in sector; and frequency purchasing from merchant.

Optionally, the logic of the merchant application may be further configured to schedule the one or more offers for a defined time period. Therefore, offers may be scheduled to commence and end at particular times or run until a predetermined number of offers have been redeemed or used.

Optionally, the processing logic may be further configured to provide payment to a merchant for purchased pre-paid offers. This may be used in particular for pre-paid offers, where the system may also collect payment from customers.

According to a third aspect, there is provided a method of generating an offer comprising the steps of:
obtaining one or more offer target attributes for targeting an offer at one or more customers;
receiving from the merchant one or more offer details describing the offer to be presented to the one or more customers; and
presenting the offer to the targeted one or more customers. This method may be implemented as a web-based portal, for example.

Preferably, obtaining the one or more target offer attributes may further comprise receiving from a merchant one or more offer objectives, and generating the one or more offer target attributes from the one or more offer objectives.

According to a fourth aspect, there is provided a method of selecting customers to receive offers comprising the steps of:
obtaining a set of transactions for a group of customers;
obtaining a set of customer attributes for each customer in the group of customers; and
selecting the one or more customers to receive an offer based on the transactions and customer attributes of each customer.

Preferably, the method may further comprise the step of restricting offers to customers having customer attributes matching one or more offer target attributes.

Optionally, the method may further comprise the step of determining a customer category for each customer from the set of customer attributes.

Optionally, each offer target attribute may be a target customer category, wherein matching the customer attributes with one or more offer target attributes further comprises matching the customer categories with the target customer categories.

Preferably, the customer attributes may be obtained as preferences indicated or supplied by the customers.

The methods described above may be implemented as a computer program comprising program instructions to operate a computer. The computer program may be stored on a computer-readable medium or transmitted as a signal.

The methods described above may be implemented as a computer programmed to perform the method.

It should be noted that any feature described above may be used with any particular aspect or embodiment of the invention. In particular, any two or more aspects relating to described methods or systems may be combined.

### Brief description of the Figures

The present invention may be put into practice in a number of ways and embodiments will now be described by way of example only and with reference to the accompanying drawings, in which:
Fig. 1 shows a high level schematic diagram of a system for selecting offers;
Fig. 2 shows a flowchart of a method for providing customers with offers;
Fig. 3 shows a schematic diagram of a system for providing customers with offers;
Fig. 4 shows a flowchart of a method for creating the offers of figure 1;
Fig. 5 shows a flowchart of a method for refining a model for providing customers with offers;
Fig. 6 shows a schematic diagram of data used to provide customers with offers;
Fig. 7 shows a schematic diagram of a flowchart for operating the system of figure 3;
Fig. 8 shows a screenshot of an offer scheduling system;
Fig. 9 shows a flowchart illustrating the lifecycle of prepaid and free voucher offers;
Fig. 10 shows a high level schematic diagram of an offer management system;
Fig. 11 shows a table illustrating various targeting parameters to be used in the offer management system of figure 10;
Fig. 12 shows a screenshot of a system for a merchant to manage and redeem offer vouchers;
Fig. 13 shows a screenshot of a system for a merchant to manage and redeem offer vouchers;
Fig. 14 shows a screenshot of a system for a merchant to manage and redeem offer vouchers;
Fig. 15 shows a screenshot of a system for a merchant to manage and redeem offer vouchers;
Fig. 16 shows example results generated from the method of fig. 2;
Fig. 17 shows screenshots of a customer application within the system of figure 1 indicating a purchase transaction;
Fig. 18 shows a screenshot of the application of figure 17 indicating a customer registering with the offer system;
Fig. 19 shows a screenshot of the customer application of figure 17 indicating the management of a customer account; and
Fig. 20 shows a screenshot of the customer application of figure 17 indicating the view of purchased, used and expired offers.

It should be noted that the figures are illustrated for simplicity and are not necessarily drawn to scale.

### Detailed description of the preferred embodiments

Offers may be made by merchants in order to increase business and drive sales. There are many different types of offers that may be issued by merchants. These offer types include free vouchers, purchased vouchers and product flash sales, for example. A deal engine may receive offers from merchants and distribute them to customers or consumers.

A merchant may place free vouchers with a deal engine to distribute discount or free offers (this service may require a fee from the merchant). A consumer or customer receives discount vouchers from the deal engine. The consumer presents the voucher to the merchant to receive a product or service and pays a discounted price (or free delivery, for example) directly to merchant.

The merchant may provide purchased or pre-paid vouchers to a deal engine for distribution. The consumer or customer receives the offer and purchases the voucher by a making a payment to the deal engine (or other entity) which typically divides the revenue with the merchant. The consumer or customer presents the voucher to the merchant to receive the product or service and makes no additional payment.

For product flash sales, a deal engine may buy products typically at a deep discount and holds inventory. A consumer or customer receives an offer and purchases the product by making payment to the deal engine. The deal engine fulfils the offer by providing product directly to the customer. The deal engine typically purchases directly from a product manufacturer.

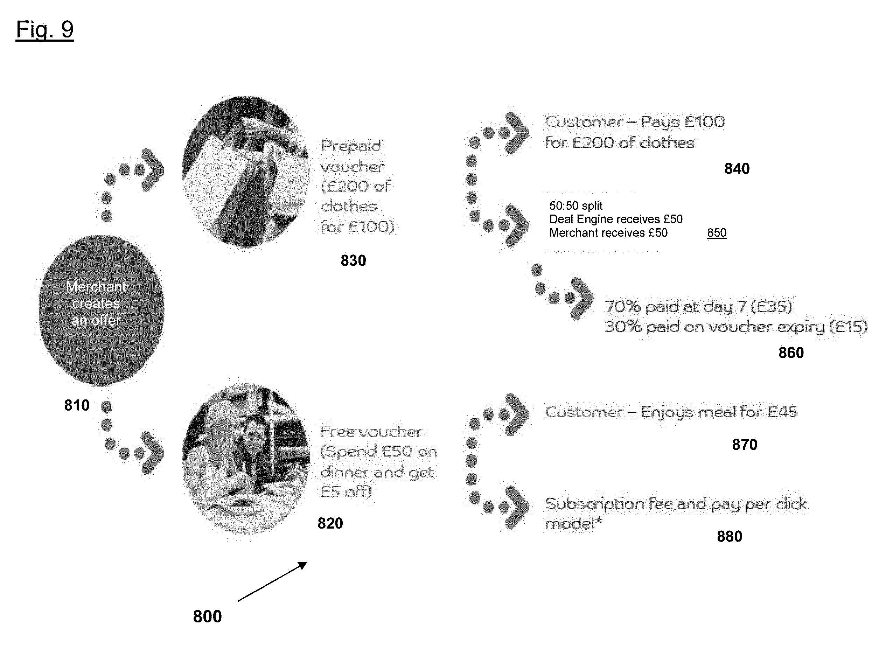

The lifecycles 800 of pre-paid and free voucher offers are illustrated in figure 9. A merchant creates an offer at step 810. This offer may be a free voucher 820 or a prepaid voucher 830. For the prepaid voucher 830, the customer may pay £100 for £200 worth of clothes (for example) at step 840. This revenue may be divided between the merchant and the deal engine or offer system at step 850. Revenue may be received at different times by the merchant at step 860.

For the free voucher 820, a customer may be entitled to enjoy discounted products or services at step 870. The merchant may be required to pay per free voucher redemption or by subscription fees at step 880.

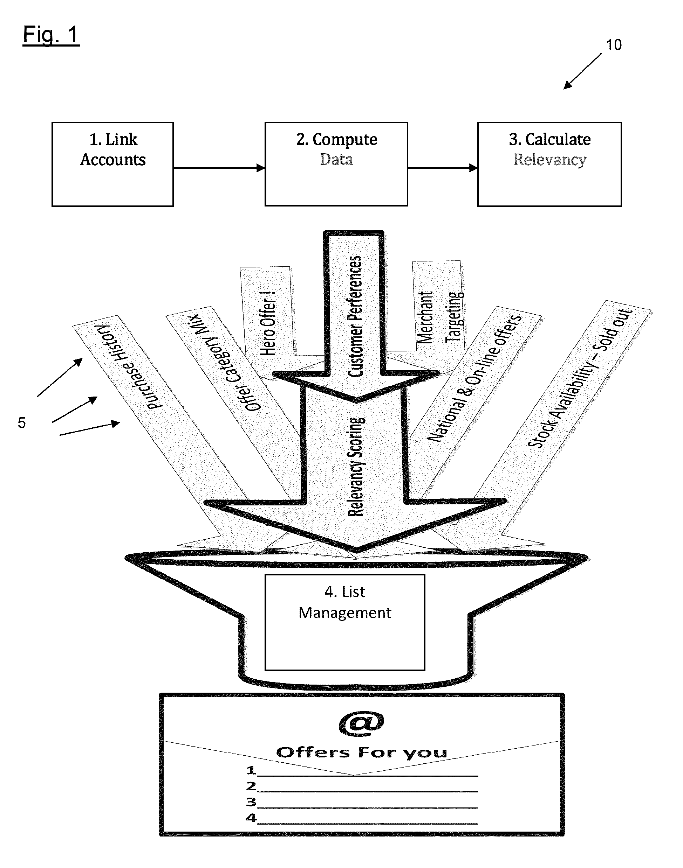

Figure 1 illustrates at a high level a method 10 for targeting particular offers to individual customers. Data inputs to this method 10 include any one or more of: transaction data (prior purchases made by customers), customer data, merchant data, offer data, social and geo-demographic data and Post Office data, for example. Other data types may be included. At step 1, accounts may be linked for particular customers, at step 2, data is computed and at step 3 the relevancy of an offer to each customer is calculated. Further details of these steps are described in the following description.

Management of the list of offers (i.e. restricting further the pool of available customers to be targeted) may take into account the input data, relevancy scoring and customer preferences, which are considered at step 4.

Outputs of this system include management information, analytics and offer scoring (i.e. matching customers to offers based on a scoring system).

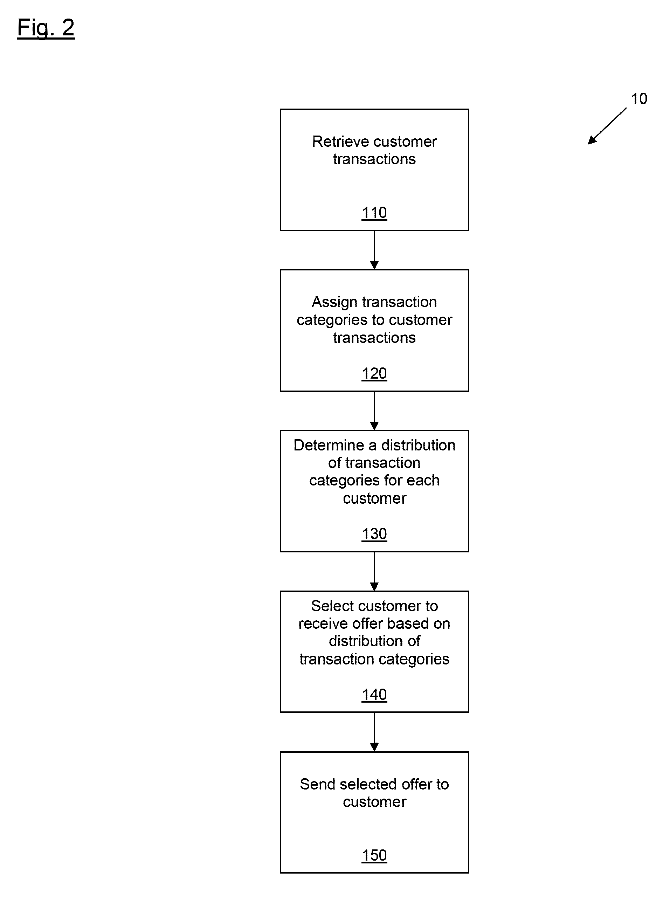

Fig. 2 illustrates in further detail the method 10 for providing customers with offers. At step 110, customer transactions are retrieved from a transaction database. At step 120, the retrieved transactions are assigned with categories (e.g. merchant sector categories). At step 130, a distribution of transaction categories for each customer is determined. For example, this determination may be based on a count or proportion of the customer's transactions that relate to merchants in particular sectors. The distribution may be based on value, frequency or number of transactions, for example. The distribution of particular transaction types may be included in this assessment. The particular mix or distribution of transactions may be compared against standard, predicted, predetermined, average or estimated customer distributions. The distribution may be compared against all customers or groups of customers or sub-groups of customers, for example. The distribution of transactions may be compared with groups of similar customers, for example. Compared sub-groups of customers may include those having particular properties or meeting certain criteria, for example. Customers having transaction distributions meeting a certain criteria or customers within top portion of transaction distributions coming closest to an ideal or preferred distribution may be selected.

At step 140, customers may be selected to receive particular offers based on their distribution of transaction categories that were determined at step 130. Once customers have been selected, then they may be sent these offers at step 150. Customers may receive offers using different communication modes.

This method 10 may include additional steps (either before or after processing transaction data) or take into consideration other data when selecting customers to receive offers. For example, a customer's identified preferences may be included and considered when determining whether or not to provide a customer with a particular offer. Furthermore, customers (and their transactions) may be filtered out or otherwise restricted in advance of any further processing so that only groups or sub-groups of customers are included in the transaction evaluation steps. The sub-groups or groups may be determined based on other data including their own declared preferences as well as past behaviour and actions (e.g. their previous take-up of previous offers).

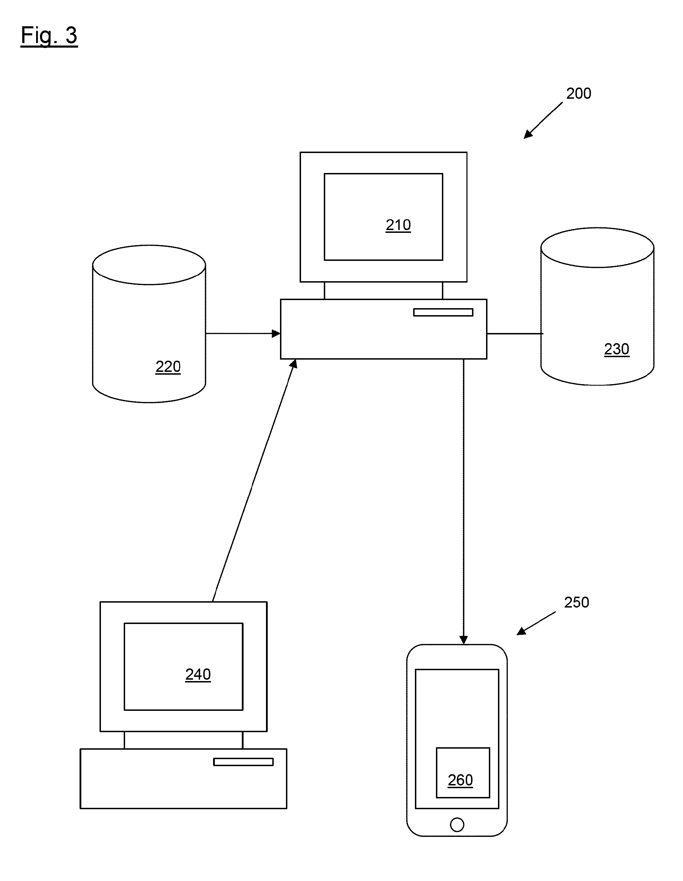

Figure 3 illustrates schematically a system 200 for providing offers to customers. A central server 210 administers the system (i.e. deal system), receives transactions from a transaction database 220 and interacts with an offer database 230. The server 210 may communicate with databases 220 and 230 directly or over a network, for example. There may be several servers 210 having similar functionality for load balancing, availability requirements or other purposes. Furthermore, there may be several separate databases 220 and 230.

One or more merchant computers 240 may communicate with the server 210 over a network such as the internet. Merchants may define and manage their offers using an internet portal accessed through a browser on each merchant computer 240.

One or more customer terminals such as smart phones 250 may also communicate with the server 210 over the internet. Each smart phone 250 contains a mobile application 260 that operates software used to interact with a customer. This functionality may include receiving customer preferences and presenting the customer with offers selected by the server 210 executing method 10.

Figure 3 does not show all elements of the system but instead illustrates at a higher level the interaction of some of the important components.

The server 210 may include a suitable operating system such as UNIX, Linux or Windows (RTM). Databases 220 and 230 may incorporate suitable relational database management systems such as Oracle (RTM), for example. Each merchant computer 240 may also include a suitable operating system such as Windows (RTM), Linux or OSX (RTM). The smartphone 250 may include an operating system such as Android (RTM) or iOS (RTM), for example.

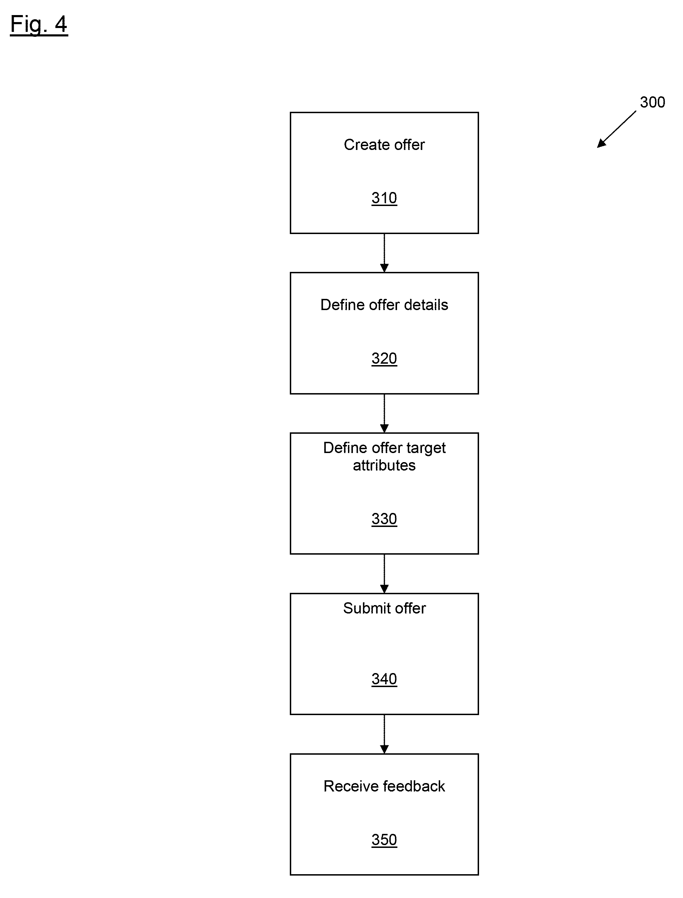

Figure 4 shows a flowchart of a method 300 for creating an offer. This method may be carried out using the merchant computer 240 described with reference to figure 3. At step 310 of this method 300, an offer may be created by the merchant. At step 320, particular offer details are defined by the merchant and entered into the merchant portal within a browser window on the merchant computer 240.

The merchant may also define offer target attributes at step 330. For example, the offer target attributes may define particular customers or customer groups that the merchant wishes to focus or target the offer at. Other customers may take advantage of such offers, but the aim is for the system 200 to present the offers predominantly to a target group of customers. Offer target attributes may include types such as customer gender, age, income, distance to nearest merchant outlet, whether the customers are existing customers of the merchant, or other parameters. Customer attributes may include customer selected preferences or identifications such as whether the customer is a food lover, enjoys healthy living, widely travelled, looks after their home, enjoys being pampered or is a motor enthusiast, for example.

At step 340, the offer is submitted to the server 210, which stores the offer in offer database 230.

At step 350, feedback may be provided to the merchant. For example, this feedback may inform the merchant that the defined offer parameters or attributes are too narrow and so the system can only identify a very limited or low number of potential offer recipients. The feedback may also include an indication of the uptake of particular offers or how many customers have received their offers or accepted offers.

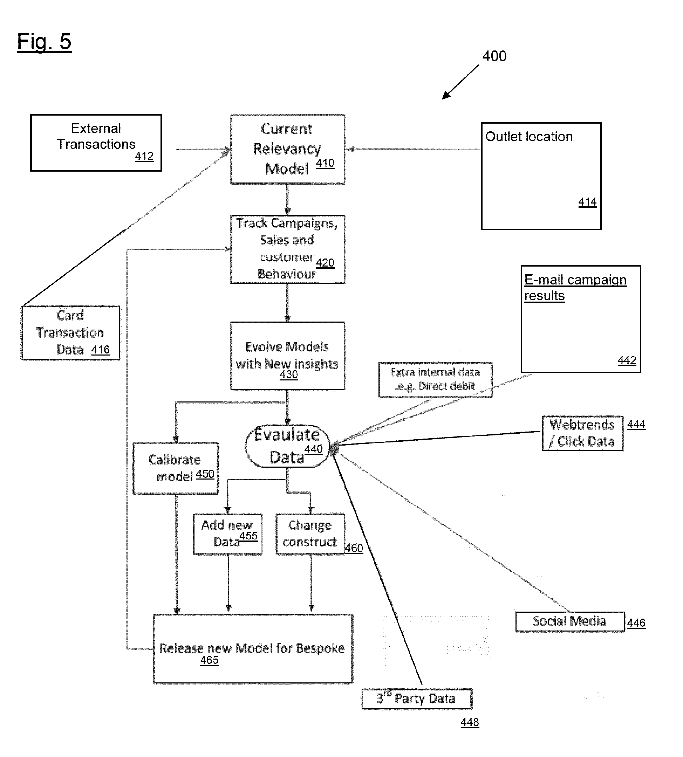

Figure 5 illustrates a flowchart of a method 400 for improving the selection of customers to receive particular offers (step 140) described with reference to figure 2. A current relevancy model 410 is used as the basis for using transaction and other data to determine which particular customers should receive each offer. Merchant offer campaigns, their sales and customer behaviour are tracked at step 420. Data are gathered and fed into the current relevancy model 410. These data include external transactions 412 (i.e. those transactions that may be acquired or determined from other organisations), internal transaction data 416, and merchant outlet locations 414. These data may be used to enhance, tune or evolve models at step 430. These acquired data are evaluated at step 440. During the evaluation of the data 440, the current relevancy model may be calibrated or adjusted 450, new data may be added 450 and the structure of the model may be changed at step 460. A new model may be released taking into account of these changes and calculations at step 465. Additionally, the data evaluated may also include third party data 448, social media data 446, web trends and internet click data 444, other internal data such as direct debit data and email campaign results 442.

The method 400 may be iterated as new data become available, new offers are generated and tracked, and the system matures.

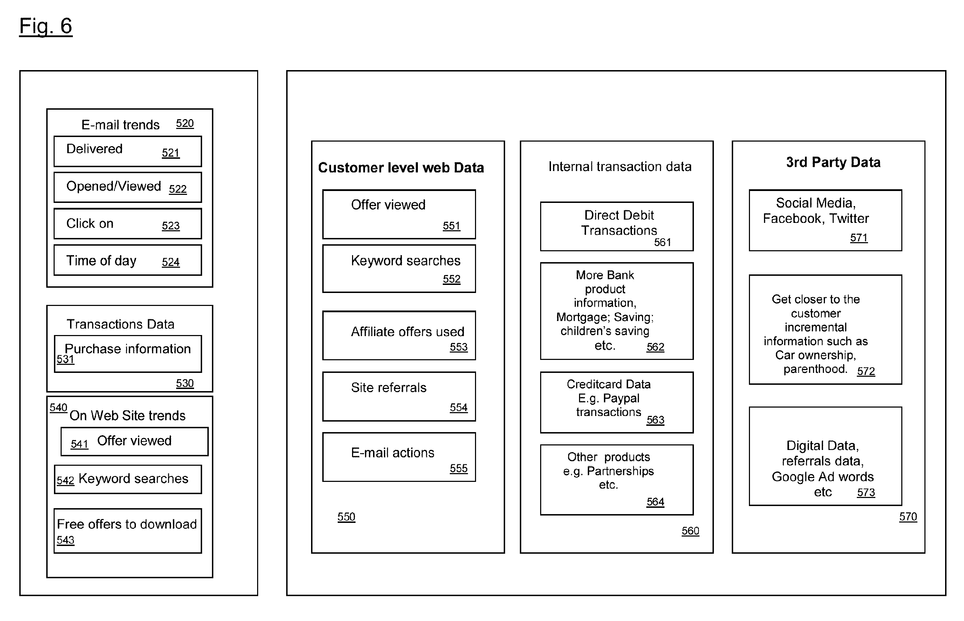

Figure 6 shows a schematic diagram of further example data types used to determine particular customers to be presented with offers. Furthermore, these data may be used to improve or evolve the relevancy model 410. These data may include email trends 520 (emails that are delivered 521, opened 522, clicked on 523, and particular times of day 524). Transaction data 530 may include purchase information 531. Website trend data 540 may include offers viewed 541, keyword searches 542, and free offers to download 543. Other data types include customer level web data 550, internal transaction data 560, and third party data 570.

The customer level web data 550 may include offer viewed information 551, keyword searches 552, affiliate offers used 553, site referrals 554, and email actions 555. Internal transaction data may include direct debit transactions 561, other bank product information 562, credit card data 563, and other products and partnership data 564.

Third party data 570 may include social media data 571, other customer data 572, and digital data and referrals 573.

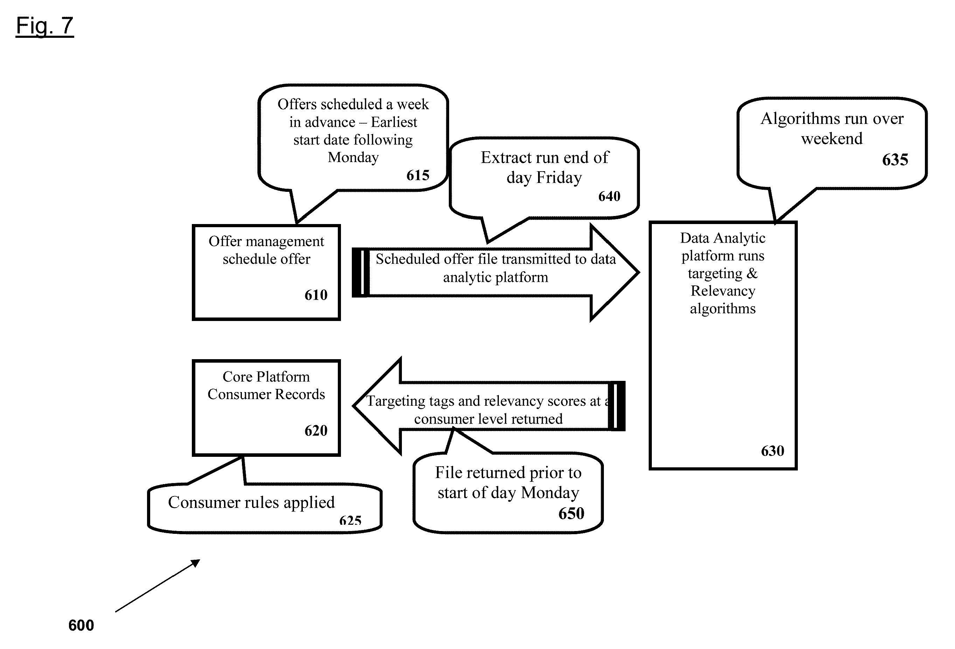

Figure 7 shows a flowchart of a method 600 for scheduling offers within the offer management system 200. An offer may be scheduled at step 610. Preferably offers may be scheduled a week in advance 615. A scheduled offer file is transmitted to a data analytic platform 630. This may be done once a week 640. This allows the data analytic platform to run relevancy algorithms over a weekend 635.

The results of the data analytic platform run 630 may be provided back and added to consumer records 620. This may also be done once a week 650 so that consumer rules are applied to each consumer or customer 625.

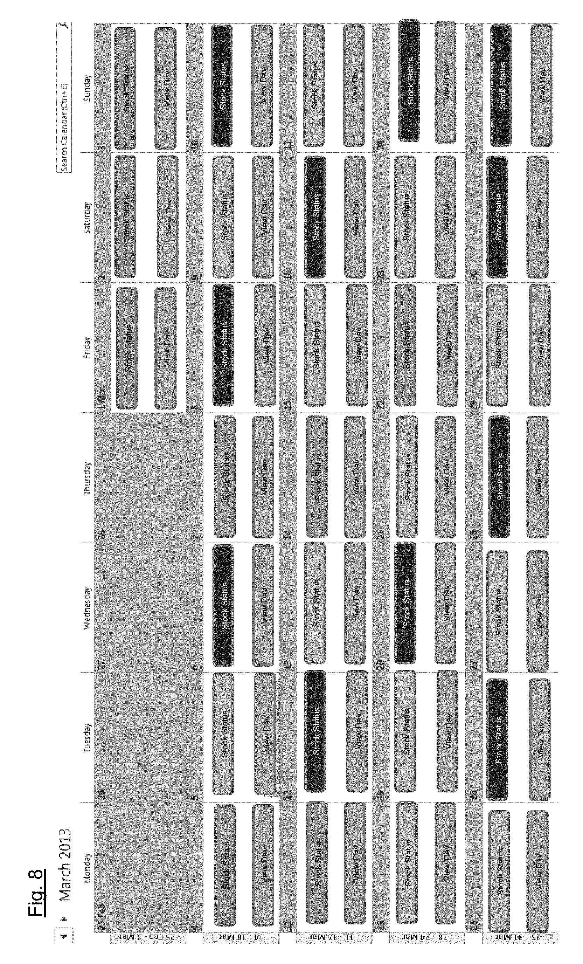

Figure 8 illustrates a screenshot from an administration portal generated by a server 210 to administer and schedule offers. In particular, the screenshot indicates stock statuses and data that may be "drilled down" to provide an operator with additional detail.

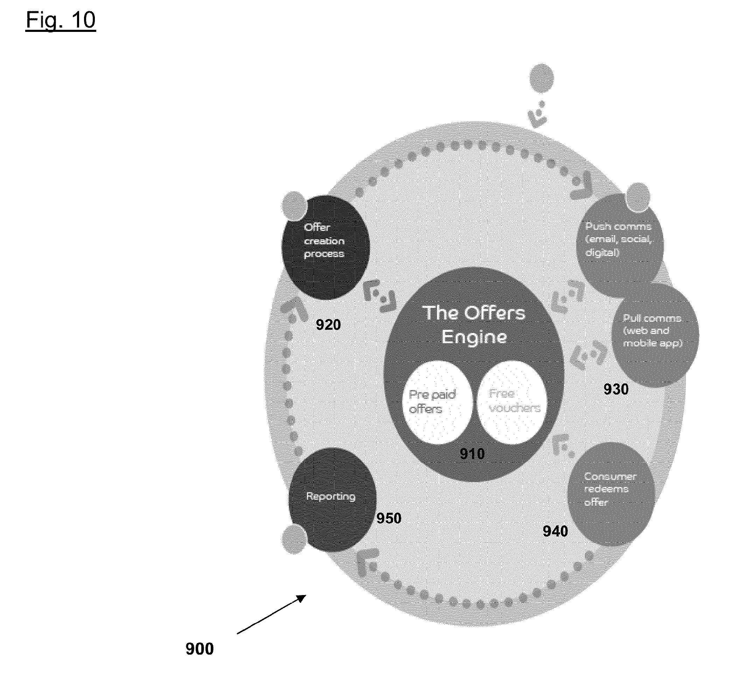

Figure 10 illustrates the life cycles 900 of offers within the system 200. An offers engine 910 (or deal engine) may operate within the server 210 described with reference to figure 3. Offers are created at step 920 and these are either pushed to offer outlets or pulled from them at step 930. These offer outlets include emails, social media and web pages (push communication). Mobile applications and other portals may pull the offers from the offers engine. Consumers or customers may redeem offers at step 940 and reporting data is sent back to the offer originator (merchant) at step 950.

Merchants in different sectors may consider similar parameters in a different way. For example, customers may be prepared or expect to travel further for some goods and services than for others. A short or low travel distance for one merchant or sector may be considered a medium or long distance for others.

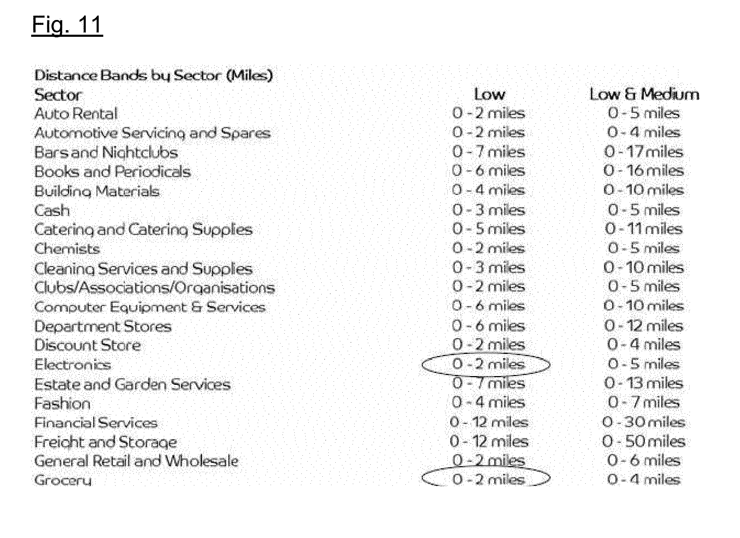

Figure 11 shows a table of merchant sectors with corresponding parameters indicating distances between a customer and an outlet considered to be a low distance or a medium distance. These data may be used when determining which particular offers are relevant to particular customers. For example, a customer may travel further to obtain financial services than to obtain auto rental services. Therefore, offers relating to financial services may be sent to customers at a particular distance from an outlet, whereas offers may be restricted to only those customers much closer to an auto rental outlet offering an offer or voucher. Customer locations may be determined from their account details (e.g. home address), transaction data (i.e. where they shop), or physical or instantaneous distance or position (e.g. determined from a GPS signal on their smartphone 250, and/or determined using a Bluetooth enabled location system, such as Bluetooth Low Energy (BLE), and/or determined using a Wi-Fi access point location and/or determined using a near field communications (NFC) system, when operating the mobile application 260). For example, the customer may be using a BLE enabled mobile device 250, the location of which may be determined using a BLE system comprising BLE beacons.

Whilst Figure 11 shows ranges to the order of miles, it will be readily appreciated that this method may equally be applied to finer measures of distance, for example to the order of metres or yards. Furthermore, the location of the customer may be determined in both outdoor environments (for example using GPS and/or WiFi and/or BLE and/or NFC) and indoor environments (for example using GPS and/or BLE and/or Wifi and/or NFC). In one particular example, BLE may be used to determine a customer's location within a shop, or the proximity of the customer to a particular shop (to an accuracy of, for example, 1-100 metres, or 1-10 metres, or 1-5 metres, or 10cm-1m, or 1cm-1m etc) and offer be sent to a customer within a particular area of a shop, or within a particular distance from a shop.

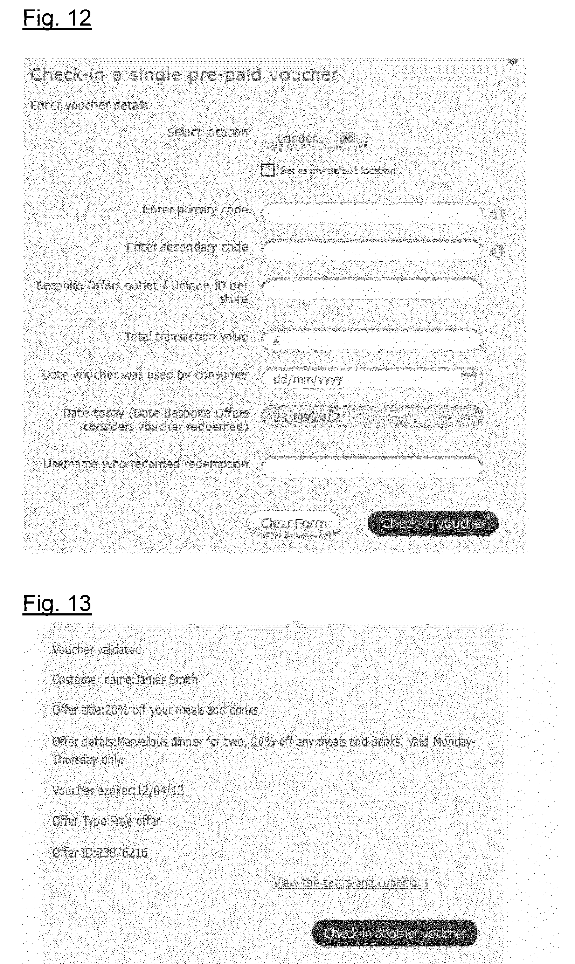

Figures 12 to 15 show example screenshots of the online merchant portal as viewed by the merchant computer 240. These screenshots allow the merchant to determine whether a voucher is currently valid and to mark a voucher as used so that its code cannot be used again. Furthermore, the screenshots illustrate aspects of the portal used to report data back to the merchant.

Figure 12 shows a screenshot of functionality for the merchant to check-in a single pre-paid voucher (i.e. confirm that it has been redeemed and so cannot be used again).

Figure 13 is a screenshot of a confirmation screen indicating that a particular voucher has been validated and checked in or used.

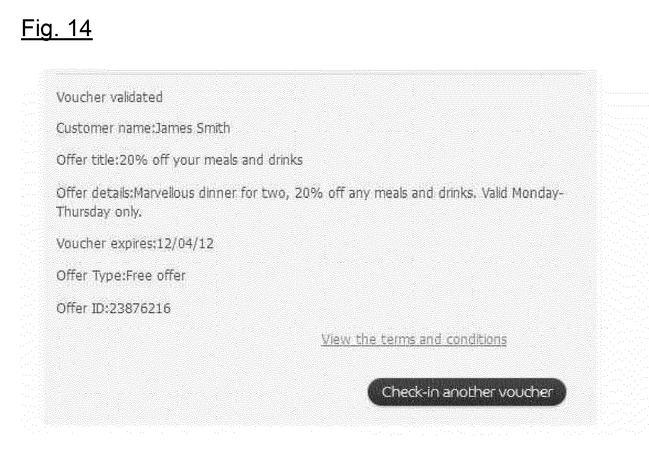

Figure 14 shows a screenshot of functionality used to check-in batches of pre-paid vouchers (i.e. checking in multiple vouchers at the same time).

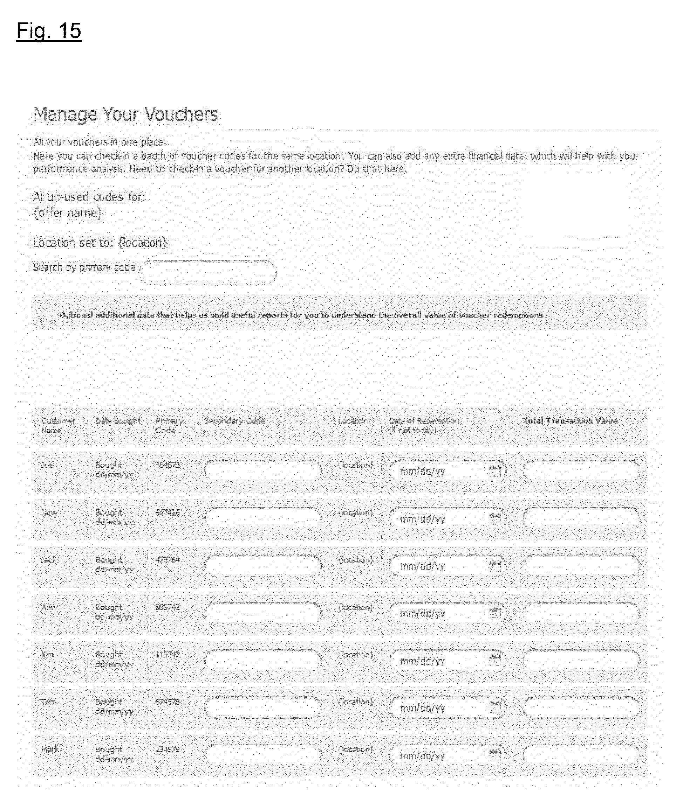

Figure 15 shows a screenshot of a further management screen used for a merchant to manage vouchers. This screen indicates vouchers that have been used and those that have not, and customer names and dates of voucher purchases and redemptions. Other information may be provided.

Transaction data indicates where individual customers have purchased goods or services from individual merchants. Therefore, these data can show which merchants customers typically shop at, how often they visit the stores or other outlets, how much they spend on average, and their preferred shopping locations. This information may be acquired on a per customer basis or for groups of customers.

Analysing the transaction data can be achieved in separate stages or steps. Each transaction may be assigned a particular sector or merchant category. As an example, 52 merchant category codes may be used to define the merchant involved in each transaction. Therefore, a distribution of merchant category codes may be determined for the transaction of each individual customer. Not all merchants may be included. For example, it may not be possible or relevant to assign merchant category codes to some merchants (especially smaller ones). Therefore, only transactions that involve merchants that may be categorised in this way may be included. These merchants may be deemed representative for their particular sector.

Each customer may have many transaction records in the transaction data set relating to those representative merchants. Therefore, the distribution of these transactions may be considered.

Determining if an individual customer is a target (using different criteria) may use an overriding target variable (0-1 with 1 indicating the highest score for a target). For example, a customer may be in a top third of spend distribution for a particular retailer or sector. Alternatively, only those customers that have shopped at a particular retailer or in a particular sector over a predetermined period of time may be set as a target customer. There may be many offer target attributes and these may differ between sectors, merchants and individual offers.

The transaction population size may be managed down further to facilitate more efficient and faster processing. This may involve sampling only a fraction of transactions from larger retailers and using sampling weights to reflect the original distribution of transactions.

Predictors may be used in model development. Each sector or retailer may have particular set variables. These may include the time since a last transaction for each customer, a number of transactions, an average transaction value, a particular retailer specific demographic profile, distance from the customer's home to a retailer outlet and a flag to indicate if whether a customer's top shopping locations match locations of particular retailer outlets. These variables (times, distances, etc.) may vary for each retailer and sector and these variables may be included in the model to predict a likelihood that a high value customer will visit or use a particular merchant.

The transaction data may therefore be used to score particular customers against offers. All offers may be defined to score the same for a particular retailer. For customers who do not shop in a particular sector (as determined by their transactions), then their score may be lowered for similar offers in that sector. Scores may be higher overall for sectors such as grocery, where there are a higher number of customer transactions and a higher proportion of the population who shop in these sectors. Therefore, such scores may be moderated or weighted accordingly.

Table 1 shows example target scoring and distributions for 274269 example customers.

**Table 1**

| Offer | Number Custs | Mean Score | Score Std Dev | Min | Max |
|---|---|---|---|---|---|
| Jewellery - GoldLinks | 274269 | 0.07745 | 0.02929 | 0.00687 | 0.8403 7 |
| Grocery - SuperStore | 274269 | 0.66997 | 0.15628 | 0.08492 | 0.9966 9 |

Tables 2 and 3 illustrate a scoring simulation for seven customers. In this simulation, the offer relates to a jewellery merchant. From the transaction data for each customer, particular spending behaviour has been determined. For example, Adrian shopped in the jewellery sector five times in the last year and his last transaction was 30 days ago. Adrian's average spend was £200 in this sector. For the particular retail of interest, Adrian made two purchases in the last two years; the last being 180 days ago and his average spend was £35. From these data, it may be determined that Chris is the best candidate for this offer as he shopped multiple times in this sector and with the particular offer merchant. His spend is relatively high and he lives close to the jewellery merchant outlet.

In contrast, Paul gets a very low score as he has no transactions in this sector, belongs to a demographic segment that it is less likely to buy jewellery and lives far away.

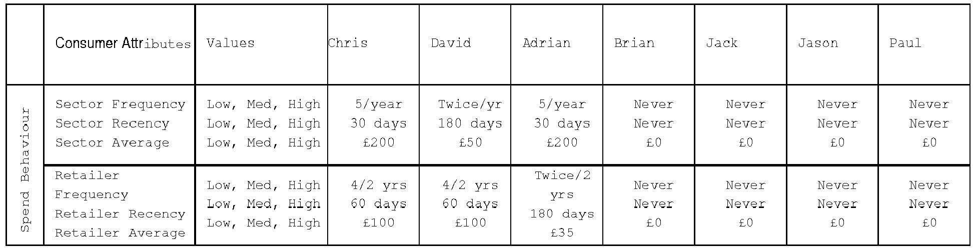

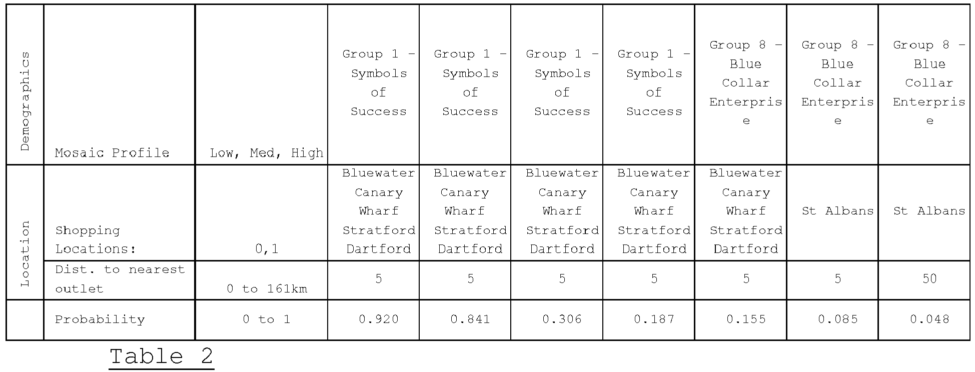

Table 3 illustrates a further example, this time in the grocery sector. Again, Chris is the best candidate for this offer as he shops frequently with the particular merchant providing the grocery offer and gets the highest rating based on his demographic profile. Furthermore, Chris lives and shops close to the particular grocery merchant.

Paul gets a much lower score as he has no transactions in this sector, belongs to a demographic group that is not targeted and lives far from any of the particular merchant's outlet.

Relevancy scores and cut-offs may be different for each sector and dependent on particular targeting criteria.

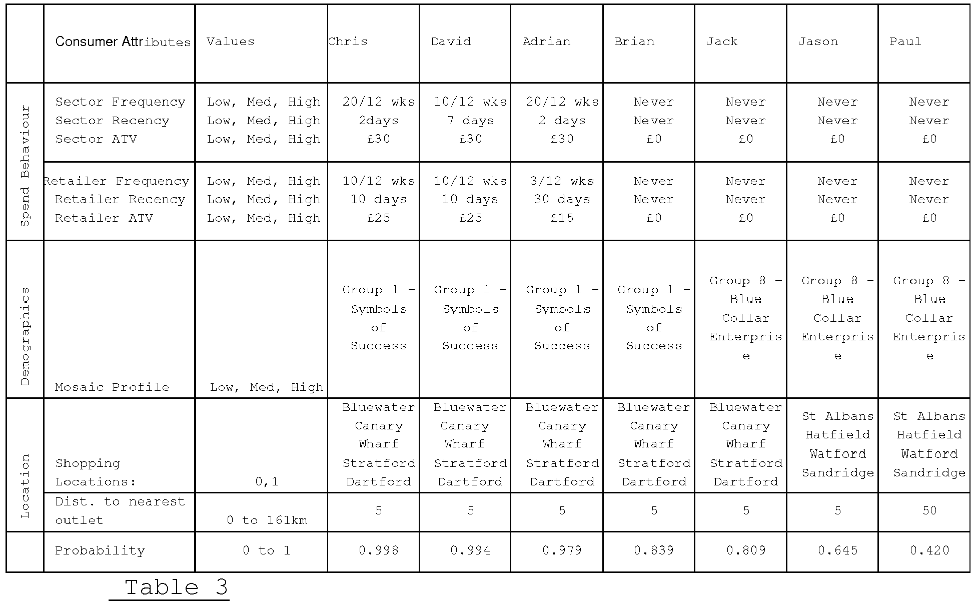

The following formula may be used to determine offer relevance to a particular customer.

Offer Relevance = a1* Consumer Preference + a2* Retailer Propensity

**Table 4**

| *Retailer* | *Offer* | *Offer Target Attributes* |
|---|---|---|
| Ticket Shop | 2 Theatre tickets for the price of 1 | Cultural Pursuits Online only |
| Spa | 2 Spa treatments for £50 | Pamper Me Looking good |
| Exp. Days | Drive a Porsche at Silverstone for £75 | The High Life Adrenaline Junky Once in a lifetime Petrol Head |
| Dept. Store | Get clothes worth £100 for £50 | Looking good Fashionista |

Table 4 shows offer target attributes or lifestyle tags that a merchant may define for particular offers. For example, the department store may determine that customers have an attribute "looking good" and/or "fashionista" should be targeted for a particular offer. These offer target attributes may be used to match customer preferences as indicated by them or customer attributes determined from their transactions. The deal engine or system 200 may incorporate only transactions into the algorithm or more preferably incorporate customer attributes determined from both transaction history (e.g. bank account data and/or past offer acceptances) and preferences.

Example customer attributes are illustrated in table 5 and summarised in table 6 in order to determine which particular offers should be allocated to individual customers.

Overall relevancy is an important component of an offer selection process, but additional rules and controls may be overlaid on this to ensure that customers receive focused offers available at any one time.

**Table 5**

| name | Lifestyle Preferences | Ticket master | Spa | Virgin Exp. | Selfridges |
|---|---|---|---|---|---|
| Andy | Sports Fan | 0 | 0 | 0 | 0 |
| | Tech Savvy | 0 | 0 | 0 | 0 |
| | Cultural | 1 | 0 | 0 | 0 |
| | Day Tripper | 0 | 0 | 0 | 0 |
| | Eat on the go | 0 | 0 | 0 | 0 |
| | Online only | 1 | 0 | 0 | 0 |
| Belinda | Home Lover | 0 | 0 | 0 | 0 |
| | Animal Lover | | 0 | | 0 |
| | Enviro' | 0 | 0 | 0 | 0 |
| | Pamper Me | 0 | 1 | 0 | 0 |
| | Healthy Living | 0 | 0 | 0 | 0 |
| Chris | Petrol Heard | 0 | 0 | 1 | 0 |
| | Adrenaline | 0 | 0 | 1 | 0 |
| | Junkie | 1 | 0 | 0 | 0 |
| | Online only | | | | |
| Donna | Fashionista | 0 | 0 | 0 | 1 |
| | Looking Good | 0 | 0 | 0 | 1 |
| | Healthy Living | 0 | 0 | 0 | 0 |
| | Pamper Me | 0 | 1 | 0 | 0 |
| | Foodie | 0 | 0 | 0 | 0 |
| Eric | No prefs | 0 | 0 | 0 | 0 |

**Table 6**

| **Name** | **Ticket Master** | **Spa** | **Virgin Exp.** | **Selfridges** |
|---|---|---|---|---|
| Andy | 1 | 0 | 0 | 0 |
| Belinda | 0 | 1 | 0 | 0 |
| Chris | 1 | 0 | 1 | 0 |
| Donna | 0 | 1 | 0 | 1 |
| Eric | 0 | 0 | 0 | 0 |

Therefore, the relevancy algorithm may incorporate preferences provided by consumers when they use the application 260 operating on their smartphone 250 or other customer portal. The spending patterns of customers may be determined from their past transaction locations and where customers live and spend (from their account details and transaction data). Furthermore, relevancy may be taken from the customer demographic profiles. Over time, as customers engage with the voucher system, then these engagements and interactions may generate data that may be incorporated into the relevancy model as well. The output of the relevancy algorithm may be a set of scores for each consumer or customer against offers for which they are eligible (i.e. meet defined targeting criteria); the higher the score, the higher the relevance.

The most relevant offers may then be selected for each customer to receive in communications based on relevancy scores and contact rules (a set of business rules governing a mix of offers displayed in communications). All offers for which customers are eligible may be visible through the customer portal (e.g. on the smartphone 250). The position of each offer on the site may be dictated by relevancy (i.e. the most relevant offers may be more prominently displayed). In other words, each customer or consumer may have a different set of prioritised offers.

The following additional example further illustrates the method. A retailer (Q&B DIY) may determine target offer attributes being males aged 35 to 60. The offer may be a pre-paid voucher costing £25 for £50 worth of goods. Table 7 may be used to determine which customers meet these criteria. In this example, Adam, Craig, George and Ian are identified.

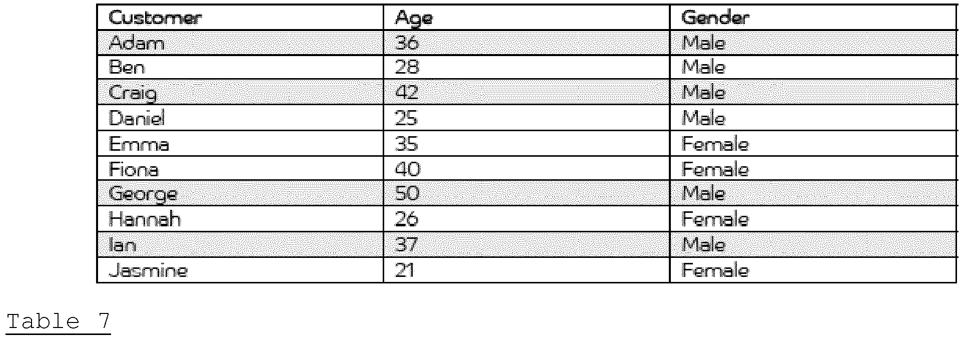

These four customers are initially assigned a Lifestyle Preference Score based on whether the lifestyle preferences they previously provided match any of those which have been tagged against the offer by the Copy Clearance team (Table 7).

**Table 8**

| **Customer** | **Consumer Preferences** | **Consumer Preference Score** |
|---|---|---|
| Adam | Petrol Head | |
| | **Home lover** | 1 |
| | Online only | |
| Craig | Sports Fan | |
| | Tech Savvy | |
| | Day Tripper | |
| | Eat on the go | |
| | **Green fingered** | 1 |
| George | No preferences | 0 |
| Ian | Cultural Pursuits | 0 |
| | Foodie | |

Bandings and values are calculated and shown in Table 8 are then converted to scores which are used to calculate a total propensity score.

**Table 9**

| **Customer** | **Q&B RFM** | **DIY RFM** | **Distance** | **Locations** | **Profile** |
|---|---|---|---|---|---|
| Adam | H | H | 3.7 | Y | Y |
| Craig | M | H | 1.4 | Y | N |
| George | N | L | 2.8 | Y | Y |
| Ian | L | M | 8.1 | N | Y |

The propensity score is then adjusted to form a total score ranging from 0 to 1 (Table 10).

**Table 10**

| **Customer** | **Q&B RFM** | **DIY RFM** | **Distance** | **Locations** | **Profile** | **Total** | **Adjusted Total** |
|---|---|---|---|---|---|---|---|
| Adam | 0.75 | 0.75 | 0.4 | 1 | 1 | 3.9 | 0.78 |
| Craig | 0.5 | 0.75 | 0.7 | 1 | 0 | 2.95 | 0.59 |
| George | 0 | 0.25 | 0.5 | 1 | 1 | 2.75 | 0.55 |
| Ian | 0.25 | 0.5 | 0.1 | 0 | 1 | 1.85 | 0.37 |

A final relevancy score is then calculated as a weighted average of the Lifestyle Preference Score and their propensity score. In this example an illustrative weight of 0.5 has been assigned to both individual scores (Table 11).

**Table 10**

| **Customer** | **Final Score** |
|---|---|
| Adam | = (0.5*1)+(0.5*0.78)=0.89 |
| Craig | = (0.5*1)+(0.5*0.59)=0.8 |
| George | =(0.5*0)+(0.5*0.55)=0.28 |
| Ian | =(0.5*0)+(0.5*0.37)=0.19 |

Example customer or lifestyle preferences include but are not limited to:
Adrenaline Junky
Family-focused
Once in a Lifetime
Animal Lover
Fashionista
Online Only
Bride/Groom To Be
Foodie
Pamper Me
Business-minded
Globe Trotter
Personal Development
Tech Savvy
Green Fingered
Petrol Head
Daily Living
Healthy Living
Cultural Pursuits
Day Tripper
Home Lover
Sports Fan
Eat on the Go
In My Neighbourhood
Surprise Me
Environmentalist
Looking Good
The High Life

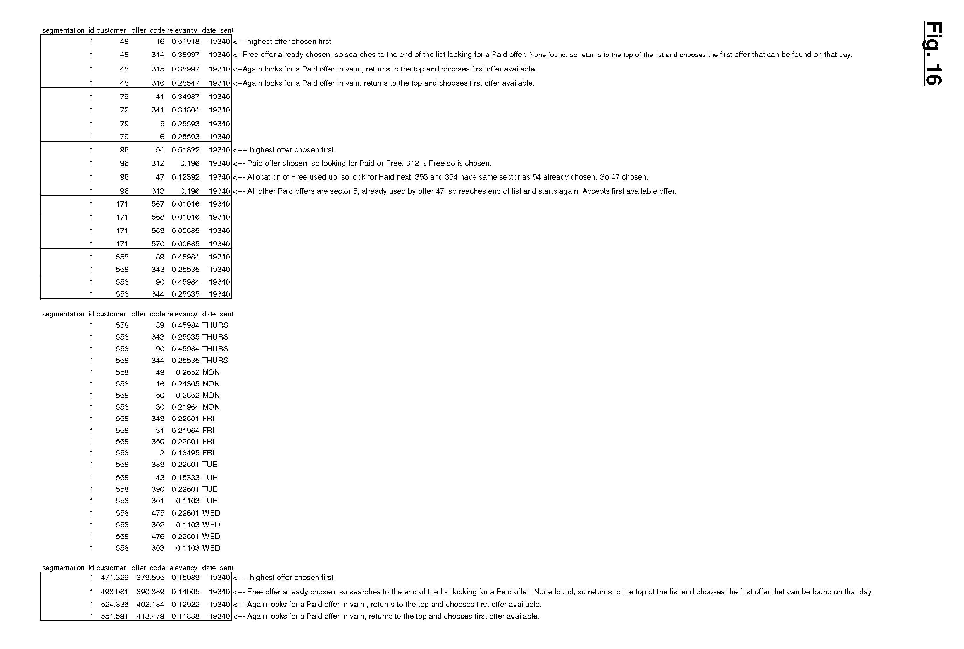

Figure 16 shows an example set of results. These results use the following example rules:
Offers are presented in descending order of relevancy score, subject to the modifications below. If scores match, order is randomly mixed.

There is a desired mix of paid/free offers for each segmentation, which should be followed. One Free, three paid, for example. This is configurable and can be varied for each segmentation (email template).

However if the desired mix cannot be satisfied by those offers with the highest relevancy, then offers of the other type may be substituted to keep the total number of offers in the communication constant.

There is a desired maximum number of offers of any one retailer or sector. The maximum retailer and sector may both be set to one, for example. Again, this is configurable for each segment (email template used).

Again, if that target maximum number cannot be met by the highest relevancy offers, then more than the target maximum number from that sector or retailer may be sent to keep the total Offers in the communication constant.

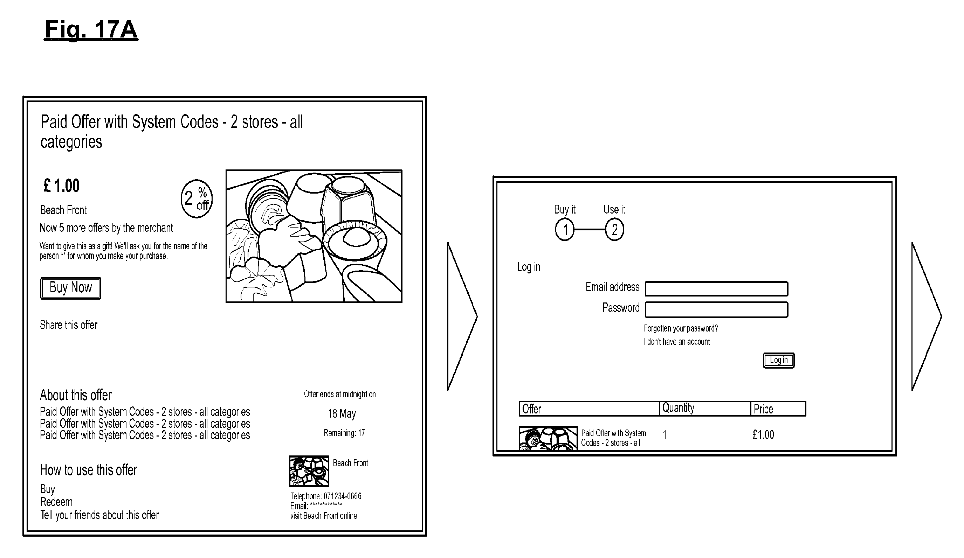

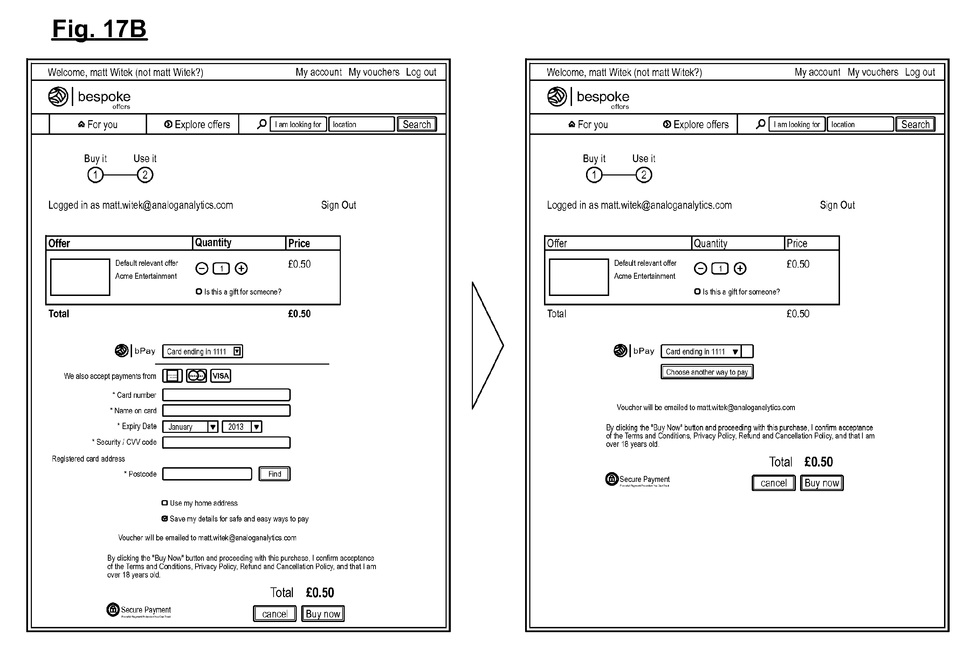

Figures 17 to 20 show example screenshots of portions of the customer application 260.

Figure 17 shows several screenshots and method steps used by a customer purchasing a particular offer (for example, a pre-paid voucher). In this flow, the customer decides to buy an offer, the customer confirms their email address and password to retrieve stored card details (where previous purchases have been made or their card details have been pre-stored). The customer may choose several different options to pay. This may be using a mobile wallet (indicated by bPay in the figure) or by another payment method such as by a credit card. Once payment has been completed, then the final screenshot indicates the successful purchase.

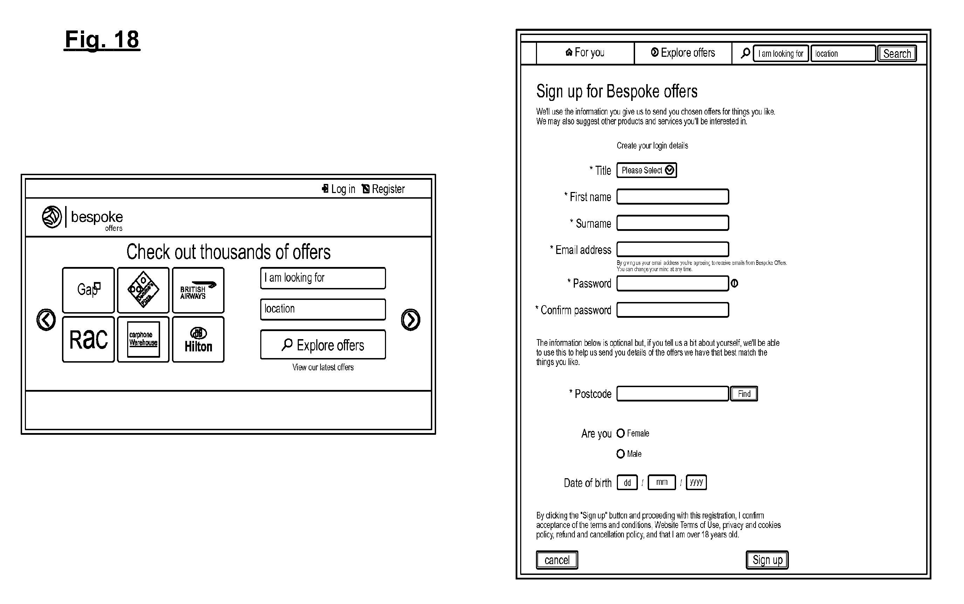

Figure 18 shows example screenshots for registering a new customer, allowing them to provide their personal details and define a password. Payment details may be included or added and saved later (for example during a first purchase).

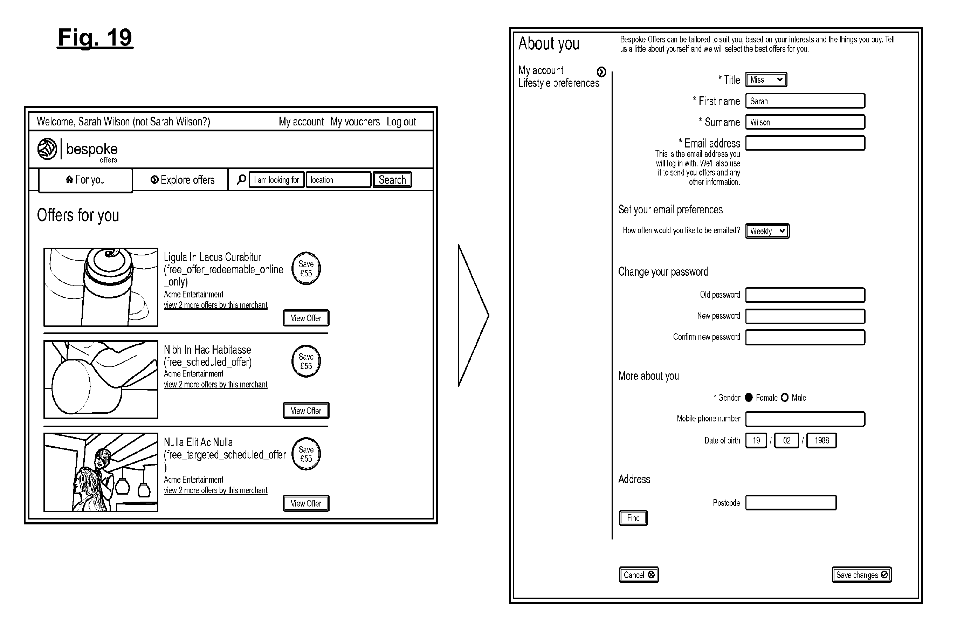

Figure 19 shows screenshots of the mobile application 260 providing the customer with options to manage their accounts and update their details.

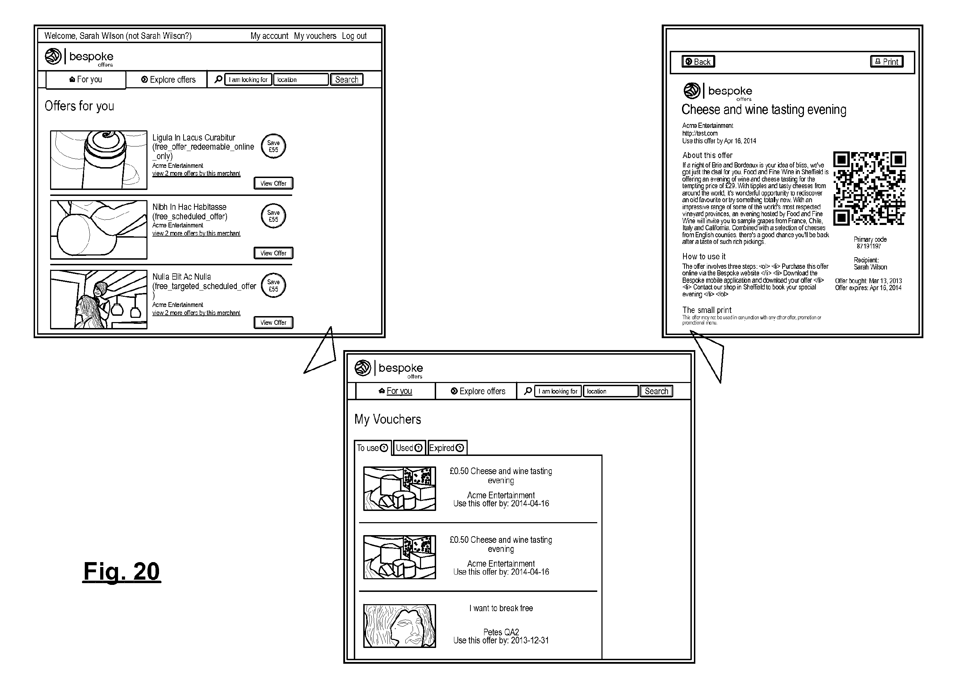

Figure 20 shows screenshots of the mobile application 260 providing functionality to the customer to be enable them to access their purchased, used and expired offers and vouchers.

There will be many variations to functionality available through the mobile application 260. For example, customers may not have pre-stored their card details and may therefore add them at the time of purchase, save such card or payment details or choose to add them each time a purchase is made (i.e. not store their payment details).

As will be appreciated by the skilled person, details of the above embodiment may be varied without departing from the scope of the present invention, as defined by the appended claims.

For example, the transactions may be acquired directly from banking or credit card transactions. The transactions may also be acquired from external sources.

Customers may receive regular updates featuring their top offers. Consumers may also browse a full selection of offers or search for specific type of offers.

The offer scoring process may use for example, 750 rules to aggregate two or more years of transaction data. With that consolidated data it applies a spend-centric relevancy score on a per customer, per offer basis.

Relevancy processing may be adapted further. For example, a "Discovery Rule" process may be used to allow relevancy to function in a similar way for acquired and non-acquired merchants (i.e. including merchants that have transactions acquired internally and externally).

Distance characteristics may be used to optimise relevancy and increase the ranking ability of the model

Information management may constantly amend base data that the relevancy models are built on and to categorise, store and transfer those data.

The relevancy algorithm orders the offers for the customers in the first instance. Later List management rules may be layered on top.

Discovery Rules may be used within a data mining algorithm and allows the systematic identification and categorisation of individual customer transactions to a particular merchant.

Sector level models are propensity models, which quantify the propensity of a customer to spend over a current amount with a particular merchant in a defined period of time in the future (typically 2 months). Each model may be optimized to be used within a particular sector.

List management may be further optimised to improve flexibility and treating customers individually based on criteria in addition to offer scoring.

List management may consider parameterised data, i.e. altering number of offers, frequency, and offer mix for defined populations.

List management may also improve offer mixing. For example, rules may be in place to optimise offers so that no one particular merchant monopolises the offers presented to customers through any one channel.

Customers may be prevented from receiving or accessing offers. Such restrictions may be placed on certain types or categories of customers. For example, a merchant may impose a restriction that any existing or previous customer (i.e. anyone who has purchased from them in the past) is not to receive a particular (or any future) offer. This may be determined from customer attributes or by other mechanisms. These customers will not be targeted and may also be prevented from viewing such offers (i.e. these offers will not be pushed to them or may not be pulled by them from the offer system).

The mechanism for publishing offers to customers may involve different levels or tiers of publishers. Publishers may recruit merchants who provide the offers. Publishers may then pass on the offers to other publishers. Each publisher may then provide the offers to subscribing customers who will purchase or use offers or otherwise use them with the recruited merchants.

A "top level" publisher may have the ability to restrict offers to a subset of other ("lower level") publishers so that only customers of particular allowed publishers will receive them or be able to view them. This may be decided by the top level publishers. This may be based on an arrangement or agreement between each publisher and each particular merchant. As an example, a fashion retailer may have several "concessions" or individual brands that they supply to customers. The fashion retailer may recruit one or more of these brands to take part in an offer and the fashion retailer then creates individual offers and applies offer criteria or attributes. Such offers or vouchers may only be accepted by the issuing fashion retailer even though other retails may supply the same brand.

Customer attributes may also include drive time, walk time and home move data, for example. Such attributes maybe obtained by running questionnaires. For example, these may capture vehicle MOT dates and pet information, etc.

Third party or external data may include social data (e.g. Facebook connect) and other web data (for content regarding marketing).

Serving the offers may be achieved using any suitable device either pushed or pulled by the customer. For example, this may include in-car internet system, watches, and flexible glass devices.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method of selecting customers to receive offers comprising the steps of:
obtaining a set of transactions for a group of customers;
assigning transaction categories to the transactions within the set of transactions;
determining for each customer in the group of customers, a distribution of their transaction categories; and
selecting the one or more customers to receive an offer based on their determined distribution of transaction categories.

2. The method of claim 1, further comprising the step of restricting the customers to be selected to receive an offer by:
obtaining a set of customer attributes for each customer; and
restricting the offer to customers matching the customer attributes with one or more offer target attributes.

3. The method of claim 2, wherein the customer attributes and offer target attributes are selected from the group consisting of: age, gender, income, drive time to merchant, walk time to merchant, travel time, home move data, vehicle MOT test date, pet information, and distance of customer home or work place to offer outlet.

4. The method of either claim 2 or claim 3, wherein the customer attributes are obtained as preferences indicated by the customers.

5. The method according to any previous claim further comprising the steps of:
determining from the transactions one or more shopping locations for each customer; and
restricting the offer to customers who have one or more shopping locations within a predetermined distance of an offer location.

6. A system for selecting customers to receive offers comprising processing logic configured to:
obtain a set of transactions for a group of customers;
assign transaction categories to the transactions within the set of transactions;
determine for each customer in the group of customers, a distribution of their transaction categories; and
select the one or more customers to receive an offer based on their determined distribution of transaction categories.

7. The system according to claim 6 further comprising one or more customer application comprising logic configured to present the selected offer to the customer.

8. The system of claim 7, wherein the logic of the one or more customer application is further configured to:
receive customer attributes from a user; and/or
search for one or more further offers.

9. The system according to any of claims 6 to 8 further comprising one or more merchant applications comprising logic configured to define one or more offers.

10. The system according to claim 9, wherein the logic of the merchant application is further configured to define one or more target customer attributes of the offer.

11. A method of generating an offer comprising the steps of:
obtaining one or more offer target attributes for targeting an offer at one or more customers;
receiving from the merchant one or more offer details describing the offer to be presented to the one or more customers; and
presenting the offer to the targeted one or more customers.

12. The method of claim 11, wherein obtaining the one or more target offer attributes further comprises receiving from a merchant one or more offer objectives, and generating the one or more offer target attributes from the one or more offer objectives.

13. A method of selecting customers to receive offers comprising the steps of:
obtaining a set of transactions for a group of customers;
obtaining a set of customer attributes for each customer in the group of customers; and
selecting the one or more customers to receive an offer based on the transactions and customer attributes of each customer.

14. The method according to claim 13, wherein the customer attributes are obtained as preferences indicated by the customers.

15. A computer program comprising program instructions that, when executed on a computer cause the computer to perform the method of any of claims 1 to 5 or 11 to 14.

16. A computer-readable medium carrying a computer program according to claim 15.

17. A computer programmed to perform the method of any of claims 1 to 5 or 11 to 14.
